# EUROPEAN PATENT SPECIFICATION

(11) **EP 3 249 146 B1**
(45) Date of publication and mention of the grant of the patent: **09.09.2020**
(21) Application number: 16171466.2
(22) Date of filing: 26.05.2016
(51) Int. Cl.: E06B 1/60, F16B 13/00

(54) **AN INSTALLATION COMPRISING A FASTENING DEVICE AND METHOD**
ANLAGE MIT EINER BEFESTIGUNGSVORRICHTUNG UND VERFAHREN
INSTALLATION COMPORTANT UN DISPOSITIF DE FIXATION ET PROCÉDÉ

(43) Date of publication of application: 29.11.2017
(73) Proprietor: Saint-Gobain Sweden AB, 191 24 Sollentuna (SE)
(72) Inventor: Carlsvärd, Christian, 135 68 Tyresö (SE); Nyman, Krister, 518 90 Sandared (SE)
(74) Representative: Hansson Thyresson AB

(56) References cited:
- GB-A- 2 131 858
- GB-A- 2 332 917
- NL-C1- 1 011 038
- US-A- 1 819 512
- US-A- 2 304 333
- US-A- 5 490 366

## Description

### FIELD OF THE INVENTION

The present invention relates to an installation comprising a masonry wall, an object, screws and a fastening device. More specifically the present invention relates to a fastening device for fastening an object to a masonry wall. This type of fastening devices is used for fastening objects to masonry walls of building blocks, such as light concrete building blocks, building blocks of expanded clay aggregates, bricks or similar. Such fastening devices are generally used for fastening objects in the form of door frames, window frames and similar to an opening in a wall but can also be used for fastening other types of objects to a wall. The present invention also relates to a method for fastening an object to a masonry wall.

### PRIOR ART

A plurality of different types of fastening devices for fastening an object to a masonry wall is disclosed in the prior art. One type of such prior art fastening devices comprises a mounting bracket with a central plate connected to two opposite side elements for engaging opposite surfaces of a wall. The side elements are provided with holes and are fixed to the wall by means of masonry nails or screws. The plate is provided with flanges projecting from an end part of the wall, wherein the object is attached to the plate by screws arranged through said flanges. Another installation is known from GB 2 131 858 A.

One problem of such prior art fastening devices is that their ability to carry loads can be insufficient.

Another problem of such prior art fastening devices is that the range of application is highly limited.

Yet another problem of such prior art fastening devices is that they can be labour intensive to mount and hence inefficient and expensive.

Hence, there is a need to provide an efficient fastening device for fastening objects to masonry walls with improved ability to carry loads.

### BRIEF DESCRIPTION OF THE INVENTION

One object of the present invention is to overcome the problems of the prior art and provide an installation with a fastening device for fastening objects to a masonry wall that can carry heavy loads and withstand dynamic loads to achieve a strong and durable connection between the masonry wall and the object. Further, easy and effective mounting of the object by means of conventional screws is achieved.

The present invention relates to an installation comprising a masonry wall, an object, screws and a fastening device for fastening the object to the masonry wall by means of the screws, wherein the masonry wall comprises a plurality of building blocks connected to each other by bed joints, the fastening device comprising a plate and at least one anchor element, wherein said plate comprises a first surface and an opposite second surface, the at least one anchor element is elongated and is fixed to the plate, at least a part of the anchor element projects perpendicular from the second surface of the plate and is embedded in at least one of said bed joints of the masonry wall, and the second surface of the plate faces the wall, characterised in the object is fastened to the plate by means of the screws, screwed through a part of the object and through the plate in a direction from the first surface thereof and into the building block.

The combination of the anchor element for embedment into the bed joints and the plate for mounting the object by screwing into the plate results in a strong and reliable fastening of the object as well as easy and effective mounting of the object. As the object is efficiently secured to the plate by screws movements of the screws in the masonry wall due to dynamic loads on the object are reduced or prevented. Further, easy and efficient mounting of the object is achieved as it can be secured to the plate by conventional screws.

The anchor element, not according to the invention, can be deformable by bending, for example by hand or by means of a tool, so that an outer part of the anchoring element can be brought to project in a plane substantially in parallel to the plane of the plate to be arranged in a vertical hole in a building block. Hence, the anchoring element can be arranged partly in a bed joint of the wall and partly into the vertical hole for efficient anchoring of the fastening device to the wall.

The anchoring element can be arranged with a bend at the building site or in advance. Alternatively, the anchoring element can be moulded with the bend. Further, this can facilitate mounting of the fastening device on a front or back side of a wall.

The fastening device can comprise a first anchor element and a second anchor element, which are spaced apart and received in different bed joints of the masonry wall, such as two different bed joints in the vertical direction which can be two consecutive bed joints. Hence, a further improved attachment of the fastening device is achieved, which can withstand even more loads. A distance between the first and second anchor elements at their attachment points to the plate can substantially correspond to the height of one or more whole building blocks of the masonry wall, such as 200 mm, to achieve easy and effective mounting.

The thickness of the plate, which can be a steel plate or other type of suitable metal plate, can be 2-5 mm or 3-4 mm to provide a strong and effective screw joint between the object and the plate.

The object of the installation can comprise a door frame, window frame, awning, shelf, wash basin, toilet, etc. For example, the installation can also comprise a door, a window, etc.

Disclosed in also a method for fastening an object to a masonry wall by means of a fastening device comprising a plate and at least one elongated anchor element, wherein said plate comprises a first surface and an opposite second surface, said method comprising the steps of
a) arranging the anchor element of the fastening device between a top side of a first masonry building block and a bottom side of a second masonry building block,
b) arranging the second surface of the plate towards the masonry wall,
c) arranging a masonry wall joint material between the building blocks and thereby providing a bed joint between said building blocks with the anchor element embedded therein, and
d) arranging screws through a part of the object and screw the screws into the first surface of the plate, through the plate and into the building block and thereby fastening the object to the plate by means of screws.

Further characteristics and advantages of the present invention will become apparent from the description of the embodiments below, the appended drawings and the dependent claims.

### SHORT DESCRIPTION OF THE DRAWINGS

The invention will now be described in more detail with the aid of exemplary embodiments and with reference to the accompanying drawings, in which
Fig. 1 is a schematic perspective view of a part of a masonry wall and a fastening device according to one embodiment, wherein the fastening device is illustrated separate from the wall,
Fig. 2 is a schematic perspective view of a part of the wall and the fastening device according Fig. 1, wherein anchoring elements of the fastening device is embedded in bed joints of the wall and a plate of the fastening device is engaging an end part of the wall,
Fig. 3 is a schematic perspective view of the fastening device of Fig. 1,
Fig. 4 is a schematic view of the fastening device of Fig. 3,
Fig. 5 is a schematic side view of the fastening device of Fig. 3,
Fig. 6 is a schematic perspective view of the fastening device according to another embodiment,
Fig. 7 is a schematic perspective view of the fastening device according to yet another embodiment,
Fig. 8 is a schematic perspective view of a building block of a masonry wall and the fastening device according to one further embodiment,
Fig. 9 is a schematic section view of a part of a wall and a fastening device according to one embodiment,
Figs. 10 and 11 are schematic perspective views showing one example of fastening of an object to the masonry wall to form an installation, wherein a part of the wall is illustrated,
Fig. 12 is a schematic view from above of the fastening device connected to a building block according to one embodiment,
Fig. 13 is a schematic view from above of the fastening device connected to a building block according to another embodiment,
Fig. 14 is a schematic view from above of the fastening device connected to a building block according to yet another embodiment, and
Fig. 15 is a schematic front view of a part of a wall and the fastening device attached thereto according to one embodiment.

### THE INVENTION

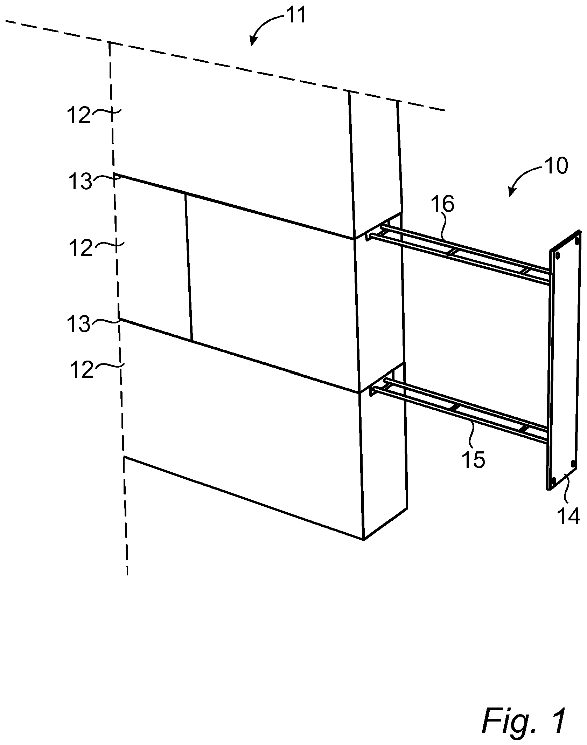

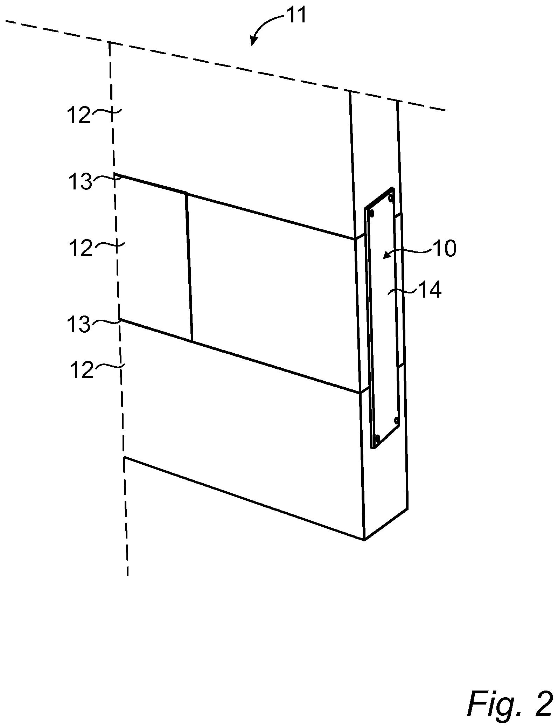

With reference to Figs. 1 and 2 a fastening device 10 and a part of a masonry wall 11 are illustrated according to one embodiment. In Fig. 1 the fastening device 10 is illustrated separated from the wall 11 in a possible mounting position according to one embodiment. The fastening device 10 is arranged to be attached to the wall 11. In Fig. 2 the fastening device 10 has been connected to the wall 11 and is ready for an object to be attached thereto. The wall 11 is a masonry wall formed by building blocks 12 joined to each other by means of a masonry wall joint material, such as mortar or similar, to form joints 13 between the building blocks 12. For example, the joints 13 are bed joints, such as horizontal bed joints. The building blocks 12 can be formed as any type of masonry building block, including elongated building elements and bricks. For example, the building blocks 12 comprise expanded clay, concrete or similar. For example, the building blocks 12 are light ballast concrete blocks. Building blocks 12 have a top, a bottom, opposite sides forming wall surfaces, which in the following is called front side and back side, and two opposite gable sides.

The fastening device 10 is arranged to be connected to the wall 11, wherein an object can be attached to the fastening device 10 to secure the object to the masonry wall 11. For example, the fastening device 10 is arranged for fastening relatively heavy objects to the wall 11, such as door frames, window frames, wash basins, washstands, shelves, awnings, etc. For example, the fastening device 10 is arranged for fastening objects being subject to dynamic loads. For example, the fastening device 10 is arranged in metal, such as steel or stainless steel or other suitable metals or alloys. Alternatively, the fastening device is arranged in composite materials, plastic materials or other suitable materials.

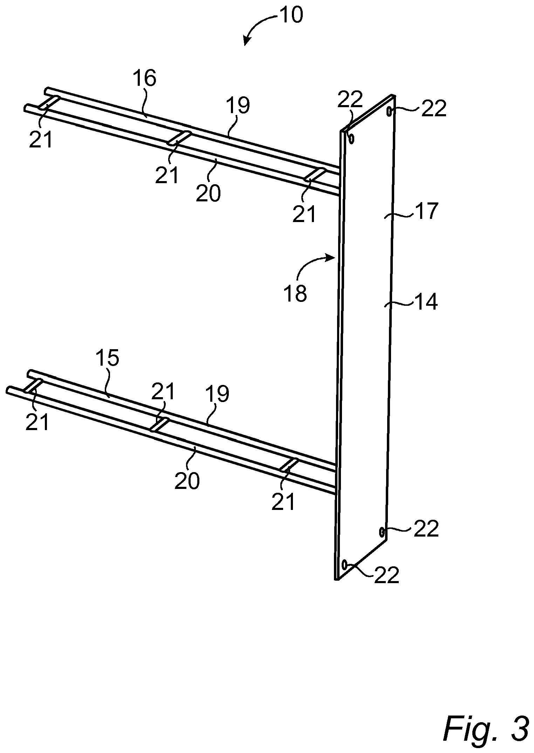

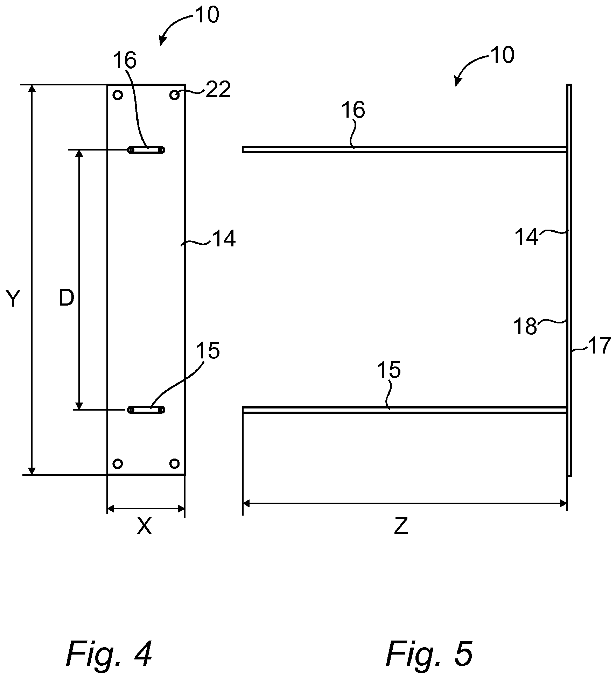

With reference also to Figs. 3-5 the fastening device 10 is illustrated more in detail according to one embodiment. The fastening device 10 comprises a plate 14 and at least one anchoring element 15. In the embodiment of Figs. 3-5 the fastening device 10 comprises a first anchoring element 15 and a second anchoring element 16. The plate 14 comprises a first surface 17 and a second surface 18 opposite to the first surface 17. The plate 14 is arranged to extend along a surface or end part of the wall 11. In the illustrated embodiment the plate 14 is substantially flat and extends substantially in a single plane. For example, the plate 14 is arranged with a thickness of 2-5 mm or 3-4 mm. In the illustrated embodiments the plate 14 is rectangular but it may have other suitable shapes, such as elongated with rounded corners, elliptic or square. The plate 14 is arranged with a first dimension X, such as width, and a second dimension Y, such as height, wherein the first dimension X, for example is 50-200 mm, 50-100 mm or 60 mm, and the second dimension Y, for example is 200-500 mm or 200-300 mm. For example, the dimension X is corresponding to or is smaller than a wall thickness.

The anchoring elements 15, 16 are elongated and extend perpendicular from the second surface 18 of the plate 14. The anchoring elements 15, 16 are arranged to be embedded in bed joints 13 of the wall 11. Hence, the anchoring elements 15, 16 are arranged to be tied into the masonry wall joint material, such as mortar, between adjacent building blocks 12. For example, the anchoring elements 15, 16 are pushed into the bed joints 13 from a position illustrated in Fig. 1 to a position as illustrated in Fig. 2 before the masonry wall joint material has solidified. Alternatively, the anchoring elements 15, 16 are arranged between building blocks 12 during construction of the wall 11. The first and second anchoring elements 15, 16 are spaced apart to form a gap between them. For example, the gap between the first and second anchoring elements 15, 16 substantially corresponds to the centre to centre distance between two bed joints 13. Hence, the distance between the first and second anchoring elements 15, 16 substantially corresponds to the height of a building block 12. For example, the first and second anchoring elements 15, 16 are arranged with a centre to centre distance D of 200 mm. In the embodiment of Figs. 3-5 the first and second anchoring elements 15, 16 are arranged in parallel to each other. Further, according to the embodiment of Figs. 3-5 the anchoring elements 15, 16 are connected to the second surface 18 of the plate 14 at a distance from the periphery of the plate 14. For example, the anchoring elements 15, 16 are arranged with a length Z of 100-500 mm, 200-300 mm or around 250 mm. According to the embodiment of Figs. 3-5 the anchoring elements 15, 16 are formed of bars, such as reinforcement bars or similar types of steel bars. For example, each of the anchoring elements 15, 16 comprises a first bar 19 and a second bar 20 being parallel to the first bar 19, wherein the bars 19, 20 are interconnected by spaced apart transverse bars 21. For example, the anchoring elements 15, 16 are formed in bi-steel. For example, the anchoring elements 15, 16 are welded to the second surface 18 of the plate 14. Alternatively, the anchoring elements 15, 16 are moulded with the plate 14. For example, a first end of the anchoring elements 15, 16 is connected to the plate 14, wherein a second end of the anchoring elements 15, 16 is a free end before it is being embedded in the wall joint 13 or otherwise arranged within the wall 11.

According to some of the illustrated embodiments, such as the embodiment of Figs. 1-5, the plate 14 is provided with optional through holes 22 for screws or similar fastening means. For example, holes 22 are arranged in corners of the plate 14. Alternatively, holes 22 are arranged at opposite end parts of the plate 14. The holes 22 are arranged for accommodating screws, wherein the fastening device 10 can be further fastened to the wall 11 by means of screws arranged through the holes 22 in the plate 14 and into the wall 11.

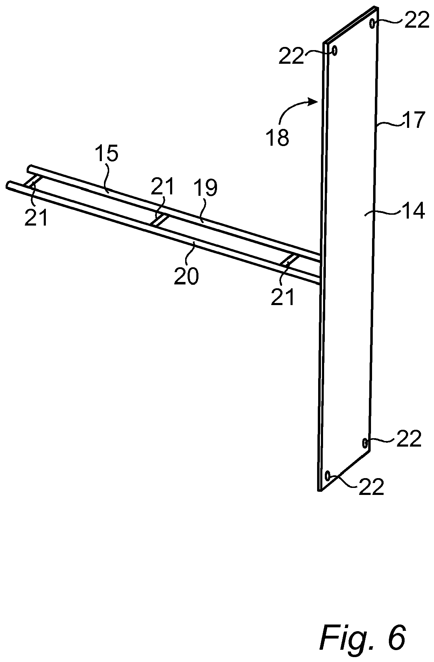

With reference to Fig. 6 another embodiment of the fastening device 10 is illustrated. According to the embodiment of Fig. 6 the fastening device comprises the plate 14 as described with reference to Figs. 1-5. In the embodiment of Fig. 6 the plate 14 is also provided with the optional holes 22 in the corners of the plate 14. However, according to the embodiment of Fig. 6 only a single anchoring element 15 is provided. The anchoring element 15 projects perpendicular from the second surface 18 of the plate 14. In the embodiment of Fig. 6 the anchoring element 15 is connected to a central portion of the second surface 18 of the plate 14. For example, the first end of the anchoring element 15 is connected to the plate 14, wherein the opposite second end is a free end before being embedded in a wall 11 such as the joint 13. Also, in the embodiment of Fig. 6 the anchoring element 15 is formed of the first bar 19, the second bar 20 and the transverse bars 21. Alternatively, the anchoring element 15 is formed of a single bar, which single bar for example is curved to provide efficient anchoring in the masonry wall joint material. Alternatively, the anchoring element 15 is formed by a plate or sheet, which plate or sheet for example is provided with holes to provide efficient anchoring in the masonry wall joint material.

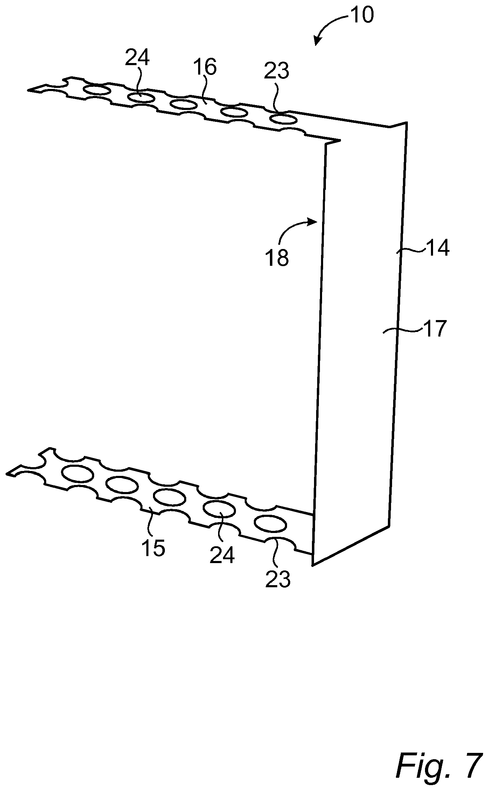

With reference to Fig. 7 another embodiment of the fastening device 10 is illustrated. According to the embodiment of Fig. 7 the fastening device comprises the plate 14 as described above. In the embodiment of Fig. 7 the anchoring elements 15, 16 are formed by bending a body, e.g. of metal, into the plate 14 and the anchoring elements 15, 16. Hence, the anchoring elements 15, 16 are integrated with the plate 14. Alternatively, the fastening device 10 is moulded with the plate and the anchoring elements 15, 16. Alternatively, the anchoring elements 15, 16 are connected to the plate 14 by welding or similar. In the embodiment of Fig. 7 the anchoring elements 15, 16 extend from opposite end portions of the plate 14, wherein the fastening device 10 is substantially U-shaped. Alternatively, the anchoring elements 15, 16 are bent so as to extend from a portion of the plate 14 displaced from the periphery thereof, such as towards the centre of the plate 14 to form a distance between the anchoring elements 15, 16 and the periphery of the plate 14. The anchoring elements 15, 16 are, e.g. arranged with recesses 23 and/or apertures 24 to provide favourable anchoring in the material in the joints 13. For example, the recesses 23 and apertures 24 are formed by punching. For example, the apertures 24 are circular, oval, rectangular, square, triangular, polygonal or arranged in any suitable shape. For example, the recesses 23 are semi-circular, semi-oval, rectangular, square, triangular, polygonal or arranged in any suitable shape.

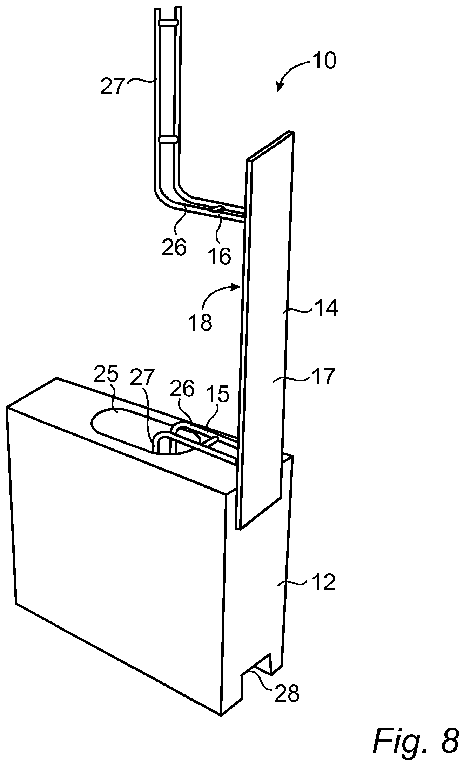

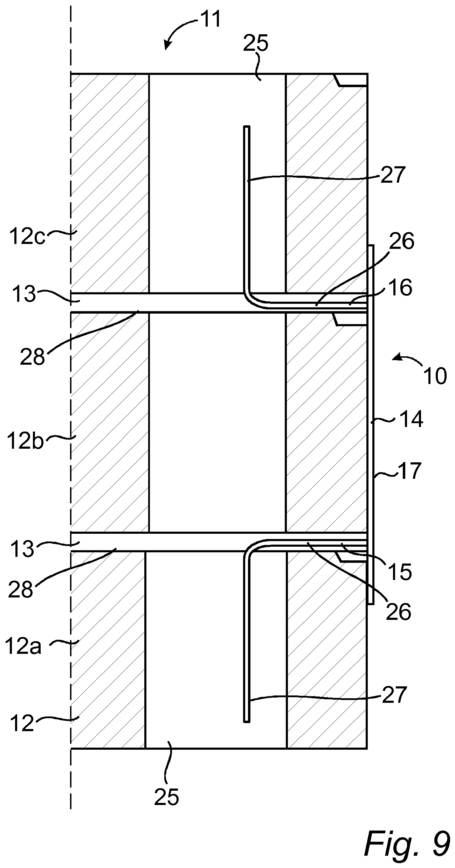

With reference to Figs. 8 and 9 the building blocks 12 are formed with a hole 25. For example, the hole 25 in the building blocks 12 extends in a vertical direction. For example, the hole 25 is a through hole extending vertically through the entire building block 12 from the bottom to the top thereof. The anchoring elements 15, 16 of the fastening device 10 are arranged with a bend or are arranged deformable by bending, wherein the anchoring elements 15, 16 comprises a first part 26 extending perpendicular from the plate 14 and a second part 27 extending in another angle from the plate 14 than the first part 26. The first part 26 of the anchoring elements 15, 16 engages the plate 14, e.g. in one end of the first part 26. The second part 27 of the anchoring elements 15, 16 extends substantially perpendicular from the first part 26, e.g. from the opposite end of the first part 26. The first parts 26 of the first and second anchoring elements 15, 16 are arranged in parallel. The second parts 27 of the first and second anchoring elements 15, 16 are aligned and extend in opposite directions, e.g. away from each other. The second part 27 of the anchoring elements 15, 16 is arranged to extend into the hole 25 in the building blocks 12. For example, the second part 27 of the first anchoring element 15 is bent downwards and placed in the hole 25 of a lower first building block 12a, which first building block 12a is arranged below and engages an intermediate second building block 12b, wherein the second part 27 of the second anchoring element 16 is bent upwards and placed in the hole 25 of an upper third building block 12c. For example, the intermediate second building block 12b is arranged between the lower first building block 12a and the upper third building block 12c. The anchoring elements 15, 16 are, e.g. formed by the first bar 19, the second bar 20 and the transverse bars 21 as illustrated. Alternatively, the anchoring elements 15, 16 are formed by a single bar. Alternatively, the anchoring elements 15, 16 are formed by a plate or sheet.

According to one embodiment the building blocks 12 are formed with a channel 28 in the top and/or bottom side of the building blocks 12. For example, the channel 28 extends horizontally through a part of the building block 12 or from one gable side of the building block to the opposite gable side through the entire building block 12. For example, the channel 28 extends in parallel to main sides of the building block forming a front and back surface of the wall 11. Hence, the channel 28 extends along the wall 11, between the front and back surfaces thereof, forming internal horizontal holes inside the wall 11. For example, the channel 28 extends perpendicular to the hole 25 in the building blocks 12.

According to the embodiments of Figs. 1 and 2 and also Figs. 8 and 9 the fastening device 10 is arranged at the end of the wall 11, such as in a door opening or a window opening, wherein the fastening device 10 is connected to the gable side of the building blocks 12. Hence, the one or more anchoring elements 15, 16 are arranged to extend into the wall from a narrow side thereof formed by the gable sides of the building blocks 12. For example, the anchoring elements 15, 16 are arranged extending into bed joints 13 in a direction from the gable sides of the building blocks 12, wherein the second surface 18 of the plate 14 is arranged towards or engages one or more of said gable sides of the building blocks 12. For example, the entire second surface 18 of the plate 14 faces the wall 11. For example, the entire second surface 18 of the plate 14 engages the wall 11. Alternatively, the second surface 18 is arranged with a distance to the wall 11, wherein the wall 11 and the plate 14 is spaced apart. According to one embodiment, the anchoring elements 15, 16 are arranged in the horizontal channels 28 of the building blocks 12, and optionally bent to also extend into the vertical holes 25 of the building blocks 12. Hence, according to one embodiment, the anchoring elements 15, 16 extend into the channels 28 to be embedded in the joints 13 of the wall 11. Alternatively, the anchoring elements 15, 16 are arranged with their first part 26 in the channels 28 and their second part 27 in the holes 25 of the building blocks 12 to be embedded in the joints 13 of the wall 11 and also to be embedded in mortar or similar in the vertically extending holes 25.

Alternatively, the fastening device 10 is arranged on a front side of the wall 11, which is described more in detail below. Then, for example, horizontal holes or channels can be arranged in the building blocks 12 in a direction perpendicular to the wall 11, suitably in a top or bottom portion of the building block 12. For example, holes or channels are arranged from a front part of the building block 12 and into the channel 28 thereof. Then the anchoring elements 15, 16 are arranged through said holes or channels and into the vertically extending holes 25 of the building blocks 12 in a manner generally corresponding to Fig. 9.

To securely mount an object to a masonry wall 11 the anchoring element 15 of the fastening device 10 is arranged between the top of the first building block 12a and the bottom of the second building block 12b. For example, the anchoring element 15 is arranged in the channel 28 of the building block 12, such as a channel 28 in the top side of the first building block 12a or a channel 28 in the bottom side of the second building block 12b. The second surface 18 of the plate 14 is arranged towards or brought into engagement with the wall 11. For example, the plate 14 is arranged towards or brought to engage a gable side of one or more building blocks 12a, 12b, such as in a door opening or window opening of the wall 11, wherein the anchoring element 15 extends into the joint 13 in a direction from the gable sides of the building blocks 12a, 12b. The anchoring element 15 is embedded in the material of the joint 13 while the material of the joint 13 is unsolidified and then the anchoring element 15 is tied therein as the material solidifies. Optionally, the anchoring element 15 is arranged with a bend or is bent and is positioned into the vertical hole 25 of the building block 12, such as down into the hole 25 of the first building block 12a. Alternatively, the anchoring element 15 is bent upwards, wherein the second building block 12b is positioned on the anchoring element 15 so that the anchoring element 15 extends upwards into the hole 25 of the second building block 12b. Solidifying material forming the joints 13 is applied in a conventional manner as the wall 11 is constructed. When the material of the joint 13 solidifies and the wall 11 is finished the fastening device 10 is tied to the wall 11. Then, the object is fastened to the fastening device 10 by means of screwing one or more screws through a part of the object and into the plate 14. Screws are screwed into the plate 14 in a direction from the first surface 17 of the plate 14. For example, the screws are screwed into the gable side of the first and/or second building blocks 12a, 12b.

According to one alternative embodiment the anchoring element 15 is positioned between the top side of the first building block 12a and the bottom side of the second building block 12b, wherein the second surface 18 of the plate 14 is arranged towards or brought to engage the front or back side of the first and/or second building block 12a, 12b and hence the front or back side of the wall 11. If required, a hole is arranged into the first or second building block 12a, 12b from a front or back side thereof and into the horizontal channel 28. For example, the hole is arranged close to the top side of the first building block 12a or close to the bottom side of the second building block 12b and horizontally into the building block. Then the anchoring element 15 is positioned in said hole, wherein the second surface 18 of the plate 14 is arranged towards or brought to engage the front or back side of the first and/or second building block 12a, 12b and hence the front or back side of the wall 11. Optionally, the anchoring element 15 is bent and is arranged with its second part 27 into the vertical hole 25 of the first or second building block 12a, 12b. The material forming the joint 13 is applied and the wall 11 is finished, e.g. in a conventional manner, wherein the fastening device 10 is tied into the joint 13 between the first and second building blocks 12a, 12b. Then, the object is fastened to the fastening device 10 by means of screwing one or more screws through a part of the object and into the first surface 17 of the plate 14. For example, the screws are screwed through the plate 14 and into the front or back side of the first and/or second building blocks 12a, 12b.

According to one further alternative embodiment the first anchoring element 15 is positioned between the top side of the first building block 12a and the bottom side of the second building block 12b as described above, wherein the second anchoring element 16 is positioned between the top side of the second building block 12b and the bottom side of the third building block 12c in a corresponding manner.

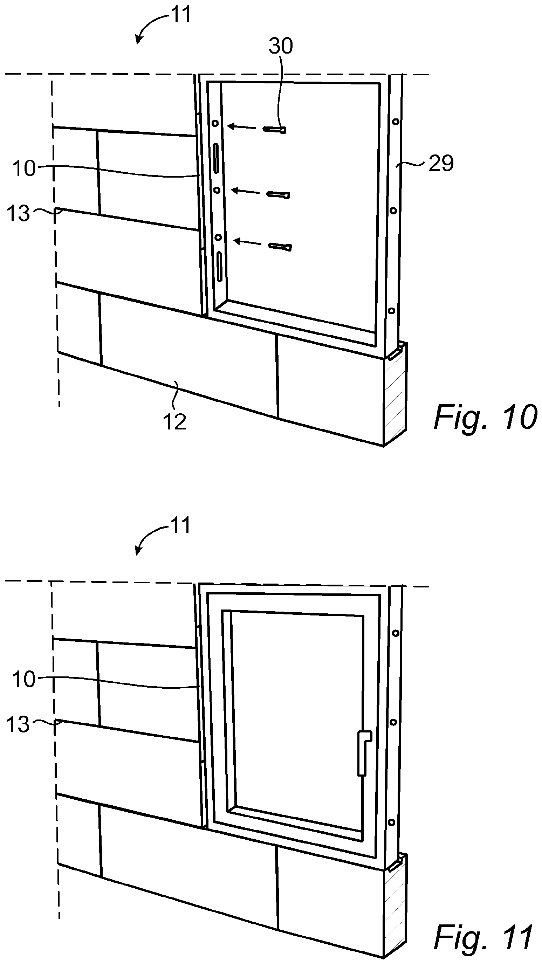

Referring to Figs. 10 and 11 fastening of an object in the form of a window frame 29 is illustrated schematically according to one possible example. The fastening device 10 is arranged in a window opening of the wall 11 and is tied into the bed joints 13 as described above. Then, the window frame 29 is fastened to the fastening device 10 by means of screws 30, such as screws which can be screwed directly into the plate 14 of the fastening device in a direction illustrated by the arrows in Fig. 10. Then, when the window frame 29 is secured to the fastening device 10, the window is mounted in a conventional manner to finish the installation, which is illustrated in Fig. 11.

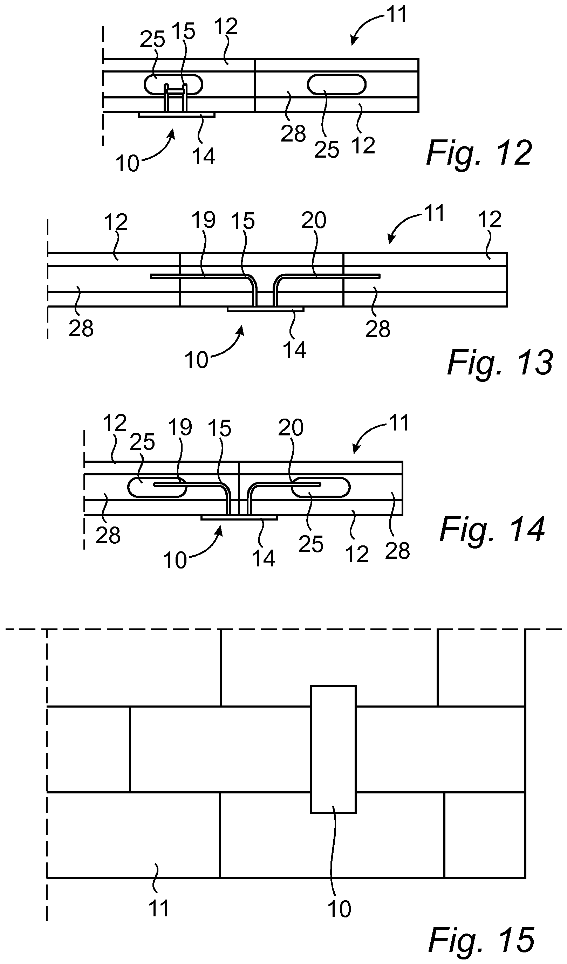

With reference to Fig. 12 a part of a masonry wall 11 under construction is illustrated, wherein the fastening device 10 is arranged with its plate 14 towards a main surface, such as a front or back surface, of the wall 11. Hence, the second surface 18 of the plate 14 is facing the front or back side of one or more building blocks 12, wherein the anchoring element 15 extends into the bed joint 13. In the embodiment of Fig. 12 the first part 26 of the anchoring element 15 extends horizontally into the bed joint 13 in a direction parallel to the gable sides of the building block 12 and perpendicular to the front and back sides thereof, wherein the second part 27 of the anchoring element 15 extends vertically into the vertical hole 25 of the building block 12. For example, a horizontal hole or channel is arranged in the building block 12 in a direction perpendicular to the front and back sides of the wall 11 and into the channel 28, so that the anchoring element 15 is arranged through said hole or channel and into the channel 28. For example, the fastening device comprises the first anchoring element 15 and the second anchoring element 16 as described above. For example, the anchoring elements 15, 16 comprise one or more bars, such as the first and second bars 19, 20, optionally connected to each other by means of the transverse bars 21. Alternatively, the first and second anchoring elements 15, 16 are formed as plates, e.g. as described with reference to Fig. 7.

With reference to Fig. 13 another embodiment of the wall 11 and the fastening device 10 is illustrated, wherein the second surface 18 of the plate 14 is facing the front or back side of one or more building blocks 12 and the anchoring element 15 extends into the joint 13. In the embodiment of Fig. 13 the anchoring element 15 is arranged with the first bar 19 and the second bar 20, wherein the first bar 19 is separated from the second bar 20, e.g. by means of cutting the transverse bars 21. The first and second bars 19, 20 are bent, so that first portions thereof extend perpendicular from the second surface 18 of the plate 14 and the wall surface, i.e. in parallel to the gable sides of the building blocks 12. For example, a horizontal hole or channel is arranged in the building block 12 in a direction perpendicular to the front and back sides of the wall 11 and into the channel 28, so that the anchoring element 15 is arranged through said hole or channel and into the channel 28. A second part of the first and second bars 19, 20 extend horizontally and perpendicular to the first part thereof to be arranged along the building block 12 inside the joint 13, such as along the channel 28. For example, the end parts of the bars 19, 20 are also bent in the vertical direction to extend into the vertical holes 25 of the building blocks 12, which is illustrated in Fig. 14.

With reference to Fig. 15 a part of a wall 11 with a fastening device 10 attached to the surface thereof is illustrated according to one embodiment, wherein the fastening device 10 is attached to the front or back surface of the wall and hence the second surface 18 of the plate 14 is arranged towards the front or back side of one or more of the building blocks 12. For example, the fastening device 10 is connected to the wall as described with reference to any of Figs. 12-14. Then, the object can be attached to the surface of the wall 11, practically anywhere horizontally along the wall 11 at the desired height, by screwing the object or a part of the object into the plate 14 of the fastening device 10.

## Claims

1. An installation comprising a masonry wall (11), an object, screws and a fastening device (10) for fastening the object to the masonry wall (11) by means of the screws, wherein the masonry wall (11) comprises a plurality of building blocks (12) connected to each other by bed joints (13), the fastening device (10) comprises a plate (14) and at least one anchor element (15), wherein said plate (14) comprises a first surface (17) and an opposite second surface (18), the at least one anchor element (15) is elongated and is fixed to the plate (14), at least a part (26) of the anchor element (15) projects perpendicular from the second surface (18) of the plate (14) and is embedded in at least one of said bed joints (13) of the masonry wall (11), and wherein the second surface (18) of the plate (14) faces the wall (11),
***characterised* in that** the object is fastened to the plate (14) by means of the screws, screwed through a part of the object and through the plate (14) in a direction from the first surface (17) thereof and into the building block (12).

2. An installation according to claim 1, wherein the anchor element (15) comprises a first end and a second end, wherein the first end is directly connected to the plate (14).

3. An installation according to claim 1 or 2, wherein the anchor element (15) is arranged with a bend.

4. An installation according to any of the preceding claims, wherein the fastening device (10) comprises a first anchor element (15) and a second anchor element (16), and wherein the first and second anchor elements (15, 16) are spaced apart and received in different bed joints (13) of the masonry wall (11).

5. An installation according to claim 4, wherein a distance between parts of the first and second anchor elements (15, 16) being perpendicular to the plate (14) corresponds to a height of a building block (12) of the masonry wall (11).

6. An installation according to claim 5, wherein the distance is 200 mm.

7. An installation according to any of the preceding claims, wherein a thickness of the plate (14) is 2-5 mm or 3-4 mm.

8. An installation according to any of the preceding claims, wherein the building blocks (12) are formed with a horizontal channel (28) in a top or bottom side thereof, and wherein the anchor element (15) at least partially is arranged in said horizontal channel (28).

9. An installation according to any of the preceding claims, wherein the building blocks (12) are formed with a vertically extending hole (25), and wherein the anchor element (15) is bent and projects into said hole (25).

10. A method for fastening an object to a masonry wall (11) by means of a fastening device (10) comprising a plate (14) and at least one elongated anchor element (15), wherein said plate (14) comprises a first surface (17) and an opposite second surface (18), said method comprising the steps of
a) arranging the anchor element (15) of the fastening device (10) between a top side of a first masonry building block (12a) and a bottom side of a second masonry building block (12b),
b) arranging the second surface (18) of the plate (14) towards the masonry wall (11),
c) arranging a masonry wall joint material between the building blocks (12a, 12b) and thereby providing a bed joint (13) between said building blocks (12a, 12b) with the anchor element (15) embedded therein, and
d) arranging screws through a part of the object and screw the screws into the first surface (17) of the plate (14), through the plate (14) and into the building block (12) and thereby fastening the object to the plate (14) by means of screws.

11. A method according to claim 10, comprising the steps of arranging a first anchor element (15) in a first bed joint (13) and a second anchor element (16) in a second bed joint (13).

12. A method according to claim 10 or 11, comprising the step of arranging a part of the anchor element into a vertical hole (25) in the building blocks (12).

13. A method according to any of claims 10 to 12, comprising the step of arranging the anchor element (15) in a horizontal channel (28) in a top or bottom side of the building blocks (12).

## Patentansprüche

1. Installation, umfassend eine gemauerte Wand (11), ein Objekt, Schrauben und eine Befestigungsvorrichtung (10) zum Befestigen des Objekts an der gemauerten Wand (11) mittels der Schrauben, wobei die gemauerte Wand (11) mehrere Baublöcke (12) umfasst, die durch Lagerfugen (13) miteinander verbunden sind, wobei die Befestigungsvorrichtung (10) eine Platte (14) und mindestens ein Ankerelement (15) umfasst, wobei die Platte (14) eine erste Oberfläche (17) und eine gegenüberliegende zweite Oberfläche (18) umfasst, das mindestens eine Ankerelement (15) länglich und an der Platte (14) befestigt ist, mindestens ein Teil (26) des Ankerelements (15) senkrecht von der zweiten Oberfläche (18) der Platte (14) vorsteht und in mindestens eine der Lagerfugen (13) der gemauerten Wand (11) eingebettet ist, und wobei die zweite Oberfläche (18) der Platte (14) der Wand (11) zugewandt ist, ***dadurch gekennzeichnet,* dass** das Objekt mit Hilfe der Schrauben an der Platte (14) befestigt ist, die durch einen Teil des Objekts und durch die Platte (14) in einer Richtung von der ersten Oberfläche (17) und in den Baublock (12) hinein geschraubt sind.

2. Installation nach Anspruch 1, wobei das Ankerelement (15) ein erstes Ende und ein zweites Ende umfasst, wobei das erste Ende direkt mit der Platte (14) verbunden ist.

3. Installation nach Anspruch 1 oder 2, wobei das Ankerelement (15) mit einer Biegung angeordnet ist.

4. Installation nach einem der vorhergehenden Ansprüche, wobei die Befestigungsvorrichtung (10) ein erstes Ankerelement (15) und ein zweites Ankerelement (16) umfasst und wobei das erste und das zweite Ankerelement (15, 16) voneinander beabstandet und in verschiedenen Lagerfugen (13) der gemauerten Wand (11) aufgenommen sind.

5. Installation nach Anspruch 4, wobei ein Abstand zwischen Teilen des ersten und des zweiten Ankerelements (15, 16) senkrecht zur Platte (14) einer Höhe eines Baublocks (12) der gemauerten Wand (11) entspricht.

6. Installation nach Anspruch 5, wobei der Abstand 200 mm beträgt.

7. Installation nach einem der vorhergehenden Ansprüche, wobei eine Dicke der Platte (14) 2-5 mm oder 3-4 mm beträgt.

8. Installation nach einem der vorhergehenden Ansprüche, wobei die Baublöcke (12) mit einem horizontalen Kanal (28) in einer Ober- oder Unterseite davon ausgebildet sind und wobei das Ankerelement (15) zumindest teilweise in dem horizontalen Kanal (28) angeordnet ist.

9. Installation nach einem der vorhergehenden Ansprüche, wobei die Baublöcke (12) mit einem sich vertikal erstreckenden Loch (25) ausgebildet sind und wobei das Ankerelement (15) gebogen ist und in das Loch (25) vorsteht.

10. Verfahren zum Befestigen eines Objekts an einer gemauerten Wand (11) mittels einer Befestigungsvorrichtung (10), die eine Platte (14) und mindestens ein längliches Ankerelement (15) umfasst, wobei die Platte (14) eine erste Oberfläche (17) und eine gegenüberliegende zweite Oberfläche (18) umfasst, wobei das Verfahren folgende Schritte umfasst:
a) Anordnen des Ankerelements (15) der Befestigungsvorrichtung (10) zwischen einer Oberseite eines ersten Mauer-Baublocks (12a) und einer Unterseite eines zweiten Mauer-Baublocks (12b),
b) Anordnen der zweiten Oberfläche (18) der Platte (14) in Richtung der gemauerten Wand (11),
c) Anordnen eines Fugenmaterials der gemauerten Wand zwischen den Baublöcken (12a, 12b) und damit Bereitstellen einer Lagerfuge (13) zwischen den Baublöcken (12a, 12b) mit dem darin eingebetteten Ankerelement (15), und
d) Anordnen von Schrauben durch einen Teil des Objekts und Einschrauben der Schrauben in die erste Oberfläche (17) der Platte (14) durch die Platte (14) und in den Baublock (12) und damit Befestigen des Objekts an der Platte (14) mittels Schrauben.

11. Verfahren nach Anspruch 10, umfassend die Schritte des Anordnens eines ersten Ankerelements (15) in einer ersten Lagerfuge (13) und eines zweiten Ankerelements (16) in einer zweiten Lagerfuge (13).

12. Verfahren nach Anspruch 10 oder 11, umfassend den Schritt des Anordnens eines Teils des Ankerelements in einem vertikalen Loch (25) in den Baublöcken (12).

13. Verfahren nach einem der Ansprüche 10 bis 12, umfassend den Schritt des Anordnens des Ankerelements (15) in einem horizontalen Kanal (28) in einer Ober- oder Unterseite der Baublöcke (12).

## Revendications

1. Installation comprenant un mur en maçonnerie (11), un objet, des vis et un dispositif d'accrochage (10) servant à accrocher l'objet au mur en maçonnerie (11) au moyen des vis, le mur de maçonnerie (11) comprenant une pluralité de blocs de construction (12) reliés entre eux par des lits d'assise (13), le dispositif d'accrochage (10) comprenant une plaque (14) et au moins un élément d'ancrage (15), ladite plaque (14) comprenant une première surface (17) et une seconde surface opposée (18), l'au moins un élément d'ancrage (15) étant allongé et étant fixé à la plaque (14), au moins une partie (26) de l'élément d'ancrage (15) faisant saillie perpendiculairement à partir de la seconde surface (18) de la plaque (14) et étant intégrée dans au moins un desdits lits d'assise (13) du mur en maçonnerie (11), et la seconde surface (18) de la plaque (14) faisant face au mur (11),
***caractérisée* en ce que** l'objet est accroché à la plaque (14) au moyen des vis, vissé à travers une partie de l'objet et à travers la plaque (14) dans une direction allant de la première surface (17) de celle-ci et jusque dans le bloc de construction (12).

2. Installation selon la revendication 1, dans laquelle l'élément d'ancrage (15) comprend une première extrémité et une seconde extrémité, dans laquelle la première extrémité est directement reliée à la plaque (14).

3. Installation selon la revendication 1 ou 2, dans laquelle l'élément d'ancrage (15) est disposé avec un coude.

4. Installation selon l'une quelconque des revendications précédentes, dans laquelle le dispositif d'accrochage (10) comprend un premier élément d'ancrage (15) et un second élément d'ancrage (16), et dans laquelle les premier et second éléments d'ancrage (15, 16) sont espacés et reçus dans différents lits d'assise (13) du mur en maçonnerie (11).

5. Installation selon la revendication 4, dans laquelle une distance entre les parties des premier et second éléments d'ancrage (15, 16) étant perpendiculaire à la plaque (14) correspond à une hauteur d'un bloc de construction (12) du mur en maçonnerie (11).

6. Installation selon la revendication 5, dans laquelle la distance est de 200 mm.

7. Installation selon l'une quelconque des revendications précédentes, dans laquelle l'épaisseur de la plaque (14) est de 2 à 5 mm ou de 3 à 4 mm.

8. Installation selon l'une quelconque des revendications précédentes, dans laquelle les blocs de construction (12) possèdent un canal horizontal (28) dans un côté dessus ou dessous de ceux-ci, et dans laquelle l'élément d'ancrage (15) est au moins partiellement disposé dans ledit canal horizontal (28).

9. Installation selon l'une quelconque des revendications précédentes, dans laquelle les blocs de construction (12) possèdent un trou s'étendant verticalement (25), et dans laquelle l'élément d'ancrage (15) est courbé et fait saillie dans ledit trou (25).

10. Procédé d'accrochage d'un objet à un mur en maçonnerie (11) au moyen d'un dispositif d'accrochage (10) comprenant une plaque (14) et au moins un élément d'ancrage allongé (15), dans lequel ladite plaque (14) comprend une première surface (17) et une seconde surface opposée (18), ledit procédé comprenant les étapes consistant à
a) disposer l'élément d'ancrage (15) du dispositif d'accrochage (10) entre un côté dessus d'un premier bloc de construction en maçonnerie (12a) et un côté dessous d'un second bloc de construction en maçonnerie (12b),
b) disposer la seconde surface (18) de la plaque (14) vers le mur en maçonnerie (11),
c) disposer un matériau de joint de mur en maçonnerie entre les blocs de construction (12a, 12b) et fournir ainsi un lit d'assise (13) entre lesdits blocs de construction (12a, 12b), l'élément d'ancrage (15) étant intégré dans celui-ci, et
d) disposer des vis à travers une partie de l'objet et visser les vis dans la première surface (17) de la plaque (14), à travers la plaque (14) et dans le bloc de construction (12) et accrocher ainsi l'objet à la plaque (14) au moyen de vis.

11. Procédé selon la revendication 10, comprenant les étapes consistant à disposer un premier élément d'ancrage (15) dans un premier lit d'assise (13) et un second élément d'ancrage (16) dans un second lit d'assise (13).

12. Procédé selon la revendication 10 ou 11, comprenant l'étape consistant à disposer une partie de l'élément d'ancrage dans un trou vertical (25) dans les blocs de construction (12).

13. Procédé selon l'une quelconque des revendications 10 à 12, comprenant l'étape consistant à disposer l'élément d'ancrage (15) dans un canal horizontal (28) dans un côté dessus ou dessous des blocs de construction (12).
